# EUROPEAN PATENT SPECIFICATION

(11) **EP 2 139 086 B1**
(45) Date of publication and mention of the grant of the patent: **18.01.2017**
(21) Application number: 09354027.6
(22) Date of filing: 15.06.2009
(51) Int. Cl.: H02G 3/22, H02B 1/30, B32B 5/32, B32B 25/04, B32B 7/00, B32B 27/18

(54) **Flexible membrane gland plate**
Flexible Membranplatte für Kabeldurchführungen
Plaque flexible à membrane pour une passe-câbles

(30) Priority: 26.06.2008 IN CH15622008; 26.06.2008 IN CH15632008
(43) Date of publication of application: 30.12.2009
(73) Proprietor: Schneider Electric Industries SAS, 92500 Rueil-Malmaison (FR)
(72) Inventor: Lalankere Shi Valingu, Gautam, 38050 Grenoble Cedex 09 (FR); Deb, Manan, 38050 Grenoble Cedex 09 (FR)
(74) Representative: Colette, Marie-Françoise

(56) References cited:
- EP-A- 0 676 093
- WO-A-89/05533
- WO-A-2007/072885

## Description

### TECHNICAL FIELD

The present invention relates to a gland plate used to pass incoming or outgoing cables to and from a switchboard, specifically a flexible membrane gland plate sandwiched with glass fibre reinforced plastic (GFRP) laminate.

### BACKGROUND ART

Gland plates are used essentially to pass incoming or outgoing cables to or from a switchboard. It provides necessary support for the cables and also protection against entry of any foreign objects.

Current solutions for gland plates in switchboards enable users to pass cables through well-defined cutouts or through guide ways in the form of cable glands. Current solutions existing in the market for Type 2 enclosures impose constraints on the user under the following circumstances, when IP 30 (so as to disallow any solid objects of diameter 2.5 mm or more) has to be respected.
i. Restriction is imposed against usage of same cutout locations to pass cables of different sizes at a later stage keeping ingress protection in context.
ii. When plastic or sheet metal gland plates are used it is cumbersome for the user to make cutouts at any given location that the user prefers.
iii. IP values would not be respected if at a later stage cables are to be removed and the hole that is formed due to cable insertion is not plugged so as to prevent ingress of foreign objects.

In the present scenario various types of gland plates primarily made of sheet metal, rubber and plastics are widely used in switchboards WO 89/05533 and WO 95/12234 e.g. disclose gland plates made of elastic material wherein cables are inserted through slots. Sheet metal gland plates either have a precut for passing cables or are cut by installers as per necessity. Moreover, different types of rubber or metallic grommets are used with sheet metal to ensure required degrees of protection while passing the cables: multi seal insert is e.g. a type of rubber grommet, which is used in metal gland plates for the secure entry of several individual cables into a single cable gland; for passing cables of different diameter through a same hole, stepper collar is used and it is required to cut off at the required level to match the cable diameter; for passage of cables arranged in a line, two different pieces of metal gland plates are used. Foam is provided to seal and allow passage of cables between two gland plates: rubber gland plates have predefined locations for the passage of cables, and cables are passed through the hole of the corresponding diameter in the required location; plastic gland plates are also similar to the rubber and metal gland plates and have precuts to pass the cables.

For all of the available solutions, either there are predefined locations or users need to cut the plate to pass cables, which becomes a difficulty. Apart from all these it is also required to respect IP values even when the cables are removed (in case of change in configuration of devices) without any insert to plug the hole formed by the insertion of the cable.

US 6 323 433 discloses a grommet for engaging any of a plurality of wire or cable diameters to provide a substantially sealed interface between the wire or cable and an interconnected structure. The grommet is an integral one-piece member formed of a highly elastic material such as neoprene.

US 4 504 699 discloses recoverable articles which can provide environmental sealing of elongate substrates such as connections between electrical wires. A device is disclosed for enclosing at least part of an elongate object for example one or more electrical conductors, which comprises a hollow dimensionally recoverable article which is capable of enclosing the object and which has an aperture that communicates between the interior and the exterior of the article, and a quantity of material which, at least after the article has been recovered, seals the aperture but which can be penetrated by a probe, the material being self-sealing so that it will seal the aperture after removal of the probe. The self-sealing material may be silicone rubber or other elastomeric materials. However, these self-sealing materials have less tear strength and compression and higher indentation forces. Thus, IP30 protection cannot be provided by said self-sealing material adopted in the above prior art.

US 3 584 888 discloses a gland for electric cables comprising a grommet of resilient material having a tapered axial hole which is distended by a cable when forced into the gland so that radial pressure is exerted on the cable whereby a fluid-tight seal is formed between the grommet and the cable. The grommet has a reduced diameter portion which is encircled by a collar, which can be tightened to constrict the cable so that axial displacement of the cable is prevented.

US 2007/0023198 discloses a gland for supporting one or more cables an annular gland body defining a hollow passage that is open at either end. A core is insertable into and removable from the passage via at least one of their ends. The core includes a resiliently deformable member that can be caused, by compression, to expand to occupy the passage. The gland body includes one or more formations to which said cable inserted into the passage is securable thereby to permit insertion and removal of the core or components relative to the gland body without the core straining any of the cables.

Another significant drawback of installing cables carrying more than 1000A current into metal sheets is that eddy current may occur and create overheating of the plate. IP30 and IP55 ratings require that all cables should be entered through one hole or each cable should be entered separately using IP55 cable glands and through non-magnetic stainless steel plate. If the incoming cable is through a gland plate, then, in order to avoid loop effect, the gland plate should be taken in two parts and the cables should be placed between the two plate.

The disadvantages of the above prior art are that there are restrictions against usage of the same cutouts to pass cables of different sizes at a later stage. Moreover, the seals mentioned therein are not strong enough to withstand ingress of foreign body while in the cable inserted position or in the cable removed position. IP values will be violated if at a later stage the cables are to be removed without using any insert to plug the hole. Therefore, there is still a need for a cable gland which would satisfy all the above requirements; said gland is preferred to be having high tear and compression strength with low indentation force with flame retardant properties in case of any fire emergencies during operation.

### SUMMARY OF THE INVENTION

It is therefore the object of the invention to provide a gland plate to be able to pass cables of cross section of 20mm² to 240mm² in a predefined area.

It is a further object of the invention to provide a gland plate to be able to use the same cutout locations to pass cables of different diameters at a later stage keeping ingress protection (IP30) in context.

It is a further object of the invention to provide a gland plate wherein insertion of cables is made with the aid of guiding pins or incisors.

It is a further object of the invention to provide a gland plate wherein, even after the removal of the cables (in case of change in configuration of devices) no insertion is required to plug the hole created by the cables.

It is a further object of the invention to provide a gland plate, which will prevent elements like dust or rodents from entering inside the switchboard.

The object of the invention is defined in appended claims.

According to one of its aspects, the present invention deals with a flexible gland plate for passing of incoming or outgoing cables to or from a switchboard, junction box, or other electrical devices. The invention is based on the concept of sandwich structure of foam, as it gives the necessary phenomenon to eliminate gaps at different levels during cable insertion; in particular, the invention deals with a flexible membrane gland plate, e.g. 15 to 20mm thick, comprising a core layer, preferably 4 to 6mm thick, of closed cell thermoplastic rubber sandwiched between top and bottom layers of thermoplastic foam, the top and bottom layers being provided with means for preventing gaps to be made. The right combination of constituents of the foam sandwich is optimized for the critical mechanical and thermal properties; in particular, density, tear strength, indentation force, resilience, compression set, hardness and flammability are selected so that the behaviour or each constituent and of their interaction in the final product fulfils the above mentioned requirements.

The gland plate may be itself sandwiched between at least two layers of glass fibre reinforced laminates, e.g. 1 to 1.5mm thick, wherein the laminate preferably comprises a ultraviolet isophtalic polyester based resin and bidirectional E-glass fibres, so as to be used as top or bottom of a switch board to allow entry of cables therein.

According to one object of the invention, the gland plate comprises a sandwich structure fabricated with a layer of thermoplastic rubber sandwiched between layers of closed cell cross linked thermoplastic foam. The thermoplastic rubber is preferably ethylene vinyl acetate copolymer with fire retardant fillers, commonly known as actifoam®, which provides several functionalities highly suitable for achieving the object of the invention, such as: protective fire barrier, thermal fire barrier, retardant barrier, sealant barrier, increase in penetration length, external protection and mechanical stability. Moreover, the closed cell structure of the actifoam® helps in attaining good thermal insulation. The closed cell crosslinked thermoplastic foam which forms the outer stratum that sandwiches the actifoam® layer is preferably acrylo nitrile butadiene copolymer, referred herein as nitrile foam, which are oriented with its grain direction mutually perpendicular to each other; the closed cell structure of the nitrile foams aid in reducing the permeability of air and moisture.

According to another object of the invention, the gland plate comprises a closed cell cross linked polyethylene foam (XLPE) as the core material and the polyurethane foam (PU) of density 170kg/m³ as the outer two stratums. A thin film of micro porous polyurethane film, e.g. with a thickness of about 50µm, is bonded on the exposed area of PU foam, in particular by a process of hot lamination at 160°C, so as to avoid ingress of moisture due to the high permeability of open cell PU. The use of this film also helps in giving the foam sandwich a good appearance on the exposed area besides providing protection to PU foam against any environmental hazards. The use of PU foam increases the temperature withstand capability of the foam upto about 120°C; it ensures easy insertion of cables and also guarantees the required degree of protection even when the cables are removed due to its remarkable resilience. The XLPE foam as the core material provides the necessary stiffness and better permeability against water and air.

To prevent the membrane from any damages due to rodents the core layer can be added with a special anti-rodent additive, the thermoplastic foam being e.g. mixed with NEWARC grade Masterbach granules.

The invention also relates to the method of inserting cables through the gland plate by disclosing guiding pins designed to help the insertion of cables: these guiding pins have conical edge that can be fixed with the cable and then directed through the foam sandwich.

### BRIEF DESCRIPTION OF THE DRAWINGS

Other advantages and characteristic features will be apparent from the following description of preferred embodiments of the invention, which are given for illustration purposes and not for limiting the same.
Figure 1A and 1B show a gland plate according an embodiment of the invention, both in an exploded view of the various layers and in the assembled state.
Figure 2A and 2B show a gland plate according another embodiment of the invention, both in an exploded view of the various layers and in the assembled state.
Figure 3A and 3B show the gland plate according to the invention sandwiched between two layers of GFRP laminates, both in an exploded view of the various layers and in the assembled state.
Figures 4A and 4B show the schematic of the assembly of the gland plate of the invention.

### DETAILED DESCRIPTION OF THE INVENTION

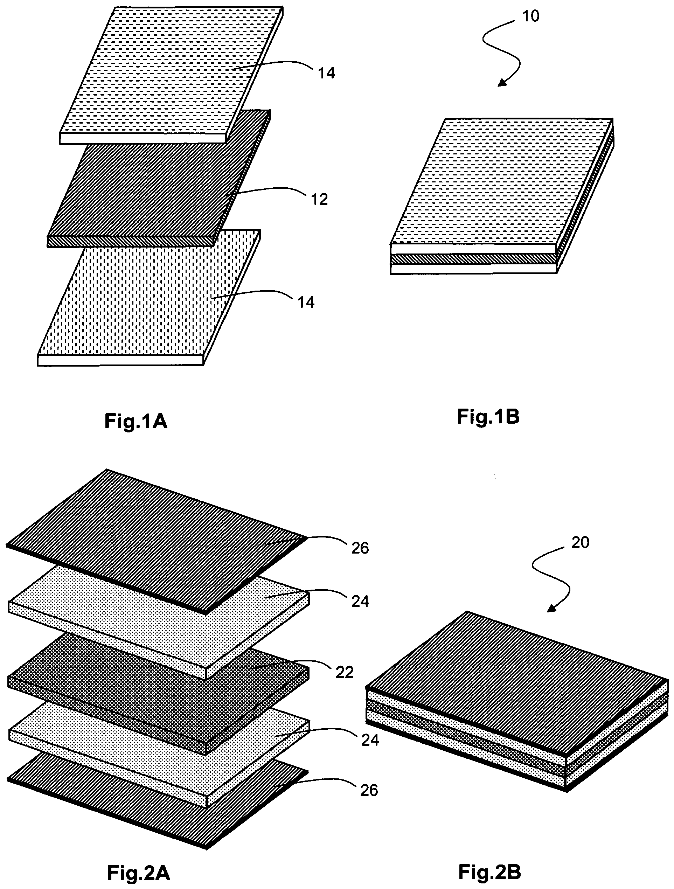

The configuration of the gland plate 10 according to an embodiment of the invention illustrated in Figure 1A comprises a core layer 12 meeting the RoHS requirements (*Restriction of the use Of certain Hazardous Substances in electrical and electronic equipment*) of flexible foam of ethylene vinyl acetate copolymer with fire retardant fillers, like the commonly and henceforth known as Actifoam®. This core material 12 is preferred due to its closed cell structure which helps in attaining good thermal insulation properties and besides all, Actifoam® does not absorb water. The individual compression set of the material stands at an astonishing 14%.

The Actifoam® core material 12 has a preferable thickness of about 4 to 6mm; the criteria for selecting a particular thickness of the material is based on the processing capability of the foam material and its ability to withstand indentation force and achieve the desired amount of compression set. Actifoam® has good memory against any indentation forces applied.

The core layer 12 is sandwiched between two layers 14 of closed cell cross linked thermoplastic foams, preferably nitrile foam, and in particular of acrylo nitrile butadiene copolymer. The outer two stratums 14 are oriented with their grain direction mutually perpendicular to each other, as clearly seen in Figure 1A. During insertion of the cable onto the gland plate 10, this fibre orientation of the nitrile foam achieves better compressibility in the direction opposite to the grain direction and also prevents gaps from being formed between the nitrile foam and the inserted cable, thereby preventing ingress of foreign particles. The closed cell structure of the nitrile foams 14 helps in reducing the permeability of air and moisture.

According to another example illustrated in Figure 2, the configuration of the gland plate 20 comprises a closed celled cross linked polyethylene foam (XLPE) 22 as the core material 22 and a polyurethane foam (PU) of density 170 kg/m³ as the outer two stratums 24. Since the structure of PU 24 is open celled it is prone to ingress of moisture (high permeability), and a thin film 26 of micro porous polyurethane, with a preferred thickness of about 30µm to 60µm is bonded on the exposed area of PU foam 24, e.g. by a process of hot lamination at 160°C. The use of this film 26 also helps in giving the foam sandwich 22, 24 a good appearance on the exposed area besides providing protection to PU foam 24 against any environmental hazards.

The use of PU foam 24 increases the temperature withstand capability of the foam up to about 120°C; it ensures easy insertion of cables and also guarantees the required degree of protection even when the cables are removed due to its remarkable resilience. The XLPE foam 22 as the core material provides the necessary stiffness and better permeability against water and air.

Although any process is possible, adhesive (and advantageously modified acrylic special sensitive adhesive) cold lamination process has been used to bond the core layers 12, 22 and the top and bottom layers 14, 24 so as to obtain a flexible membrane gland plate 10, 20, shown in Figures 1B and 2B, having an advantageous overall thickness of 15 to 20mm. In particular, the thickness of the core layer 12, 22 is about 4 to 6mm, and the thickness of the top and bottom layers 24. Also, in view of some constraints imposed by the technical specifications, the core foam 12, 22 can be mixed with a special antirodent additive, for instance Masterbach antirodent granules, to prevent the membrane 12, 20 from any damages due to rodents.

It has been proven that the specific selection made according to the invention for the sandwich structure of foam gives the necessary substrate property to eliminate gaps at different levels during cable insertion; in particular, the suitable foam material for a gland plate is desirable to have high mechanical strength (tear strength, hardness), low compression set, flame retardant property and high temperature withstand capacity and comparative examples below in Table I show the different parameters for various elastomers and foam material. Seven different configurations of foam sandwich were fabricated and tested as per ASTM D-3574 standards, the results being shown in Table II.
**A.** *PU film (50µm)* + *PU 170* + *Polyethylene170* + *PU 170* + *PUfilm (50µm)*
**B.** *Nitrile* + *Polyurethane120* + *Nitrile*
**C.** *Polyurethane120* + *Polyethylene Fire grade 120D* + *Polyurethane120*
**D.** *Nitrile* + *Polyethylene60* + *Nitrile*
**E.** *Nitrile* + *Polyethylene40* + *Nitrile*
**F.** *Nitrile* + *Conductive Ethylene Vinyl Acetate 70* + *Nitrile*
**G.** *Nitrile* + *Actifoam* + *Nitrile*

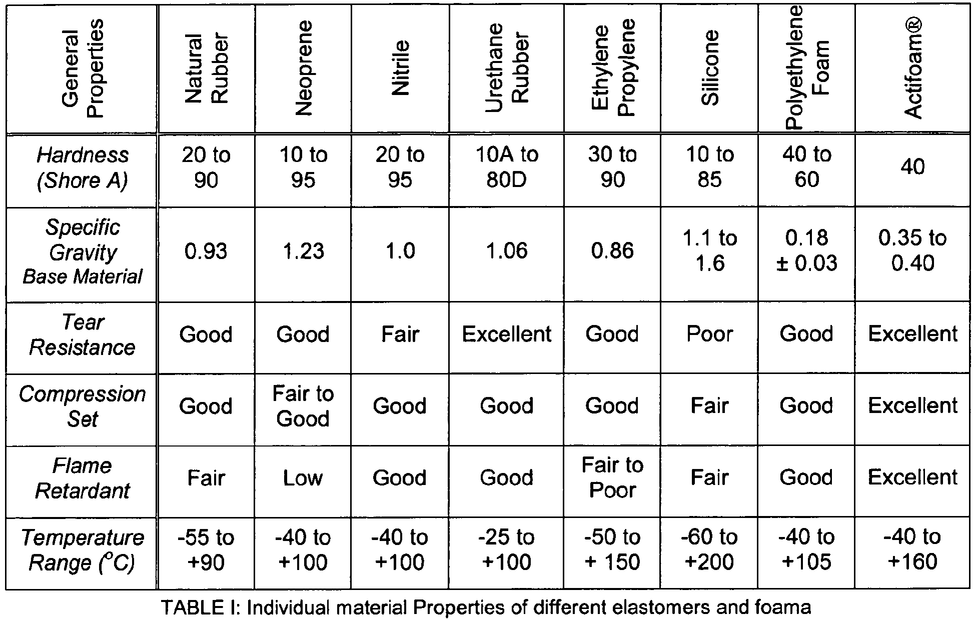

**TABLE II: Test results of different foam sandwich configurations**

| Test Method | Test Description | A | B | C | D | E | F | G |
|---|---|---|---|---|---|---|---|---|
| BS ISO 7214-19 | Density (g/cc) | 0.072 | 0.12 | 0.082 | 0.076 | 0.081 | 0.095 | **0.19** |
| ASTM D3574-95 | Tear Strength (N/M) | 1034 | 1150 | 1158 | 892 | 1000 | **1426** | 1278 |
| ASTM D3574-95 | Compression set (%) 70°C, 22h, 50% defl. | 53.6 | 70.8 | 40 | 86 | **88** | 84 | 86.7 |
| STM D3574-95 (Test B) Standard | Indentation Force (N) | | | | | | | |
| | at 25% compression | 150 | 147 | 85 | 1035 | 1134 | **1200** | 850 |
| | at 65% compression | 1833 | 1808 | 1205 | 4928 | 4365 | 5164 | **5350** |
| S 7888-76 (Cl.6) (Standard) | Hardness Number | | | | | | | |
| | 25% | 0.05 | 0.05 | 0.03 | 0.32 | 0.36 | **0.38** | 0.26 |
| | 50% | 0.29 | 0.28 | 0.12 | 0.92 | 0.89 | **1.06** | 0.87 |

As explained above, the configuration with the least indentation force, high tear strength and compression set with optimum hardness would be most desirable; the results for configurations A and G clearly are better for the desired purpose.

In particular, configuration D, E and F cannot be selected since the tear strength is high but indentation force and hardness number are also very high which can create difficulty to pierce the gland plate while passing the cable. For configuration C, the compression set may not be sufficient enough to give a required IP30 protection after removal of cable. Configurations A and G provide optimum results as for harness, tear strength and indentation force to give required strength; compression set is good enough to give IP30 protection, in particular with configuration G, whereas configuration A is potential cost effective solution.

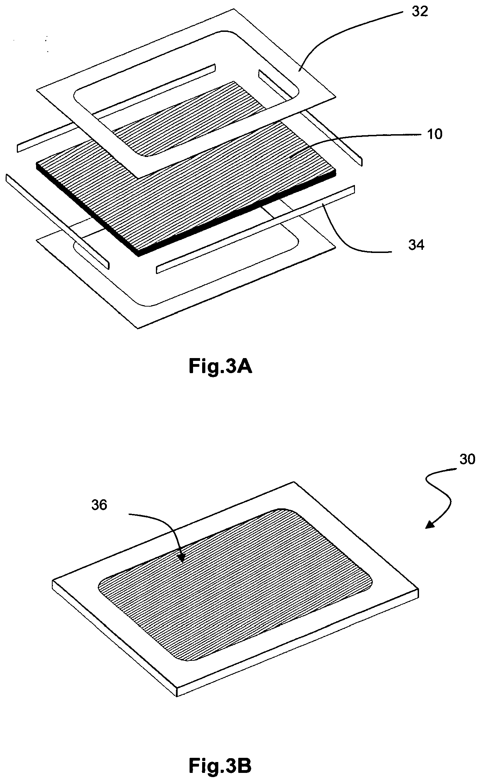

As shown in figures 3A and 3B, to form an element 30 which is easy to handle, the above-mentioned gland plate configuration 10, 20 is sandwiched between two GFRP (Glass Fibre Reinforced Plastic) laminates 32; the thickness of the GFRP laminate 32 was preferably selected at 1mm after performing a structural analysis based on the maximum loading conditions under which the panel could be subjected to.

The GFRP laminates 32 act as reinforcement for the gland plate 10; in particular, such a reinforcement material may be a bi-directional woven E-glass fibre with an ultraviolet isophtalic polyester based resin forming the matrix material, fabricated in a 60-ton compression-moulding machine. After the post curing process, the laminates 32 are marked with necessary dimensions and cut to required profile so as to ensure enough surface contact for bonding the GFRP 32 and foam sandwich 10. Subsequently the two faces are preferably bonded with the aid of epoxy based adhesive capable of transmitting shear and axial loads to and from the sandwich core. Open edges on sandwich panels 30 can be sealed to prevent moisture and dust ingress, to enhance appearance or permit subsequent fixings; in this preferred embodiment an edge filler 34 method has been used to close the edges. The entire panel 30 is then allowed to cure under room temperature.

For bulk manufacturing, Resin Transfer Molding (RTM) process can be adopted as it proves to be more economical and have good control over reinforcement orientations, in which case the additional operation of edge closure would not be required.

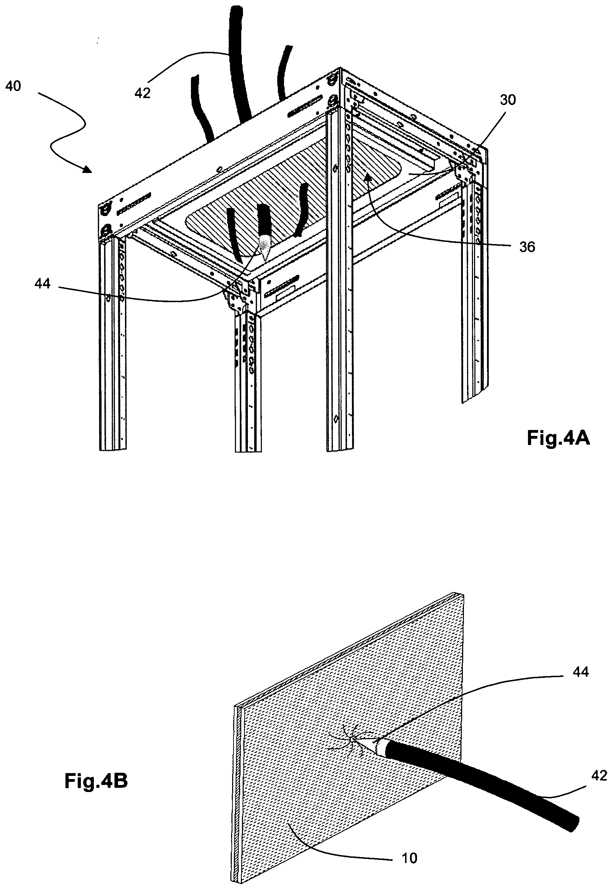

The exposed area 36 of the sandwiched foam in the GFRP panel 30 forms the zone for cable entry. This panel 30 can be installed along with a base column either on the top or bottom of the switchboard or any low and medium voltage enclosures 40 employing cable insertion for connecting devices: figure 4A. To be inserted in the exposed area 36; the cable 42 may be connected to a guide pin 44, that aid in easy entry of the cable 42. The cables 42 are fixed onto the guide pins 44, which are made for the required cable sizes and these guiding pins, having a conical edge, can then be directed through the foam sandwich 30.

As illustrated in Figure 4B, when present, the grain orientation of the nitrile foam 14 achieves better compressibility in the direction opposite the grain direction and also prevents gaps from being formed between the nitrile foam 14 and the inserted cable 42, thereby preventing ingress of foreign particles. The closed cell structure of the nitrile foams 14 aid in reducing the permeability of air and moisture.

It should be noted that on removal of the cable 42 from the gland plate 10, 20 (in case of change in configuration of devices) no insertion is required to plug the hole created by the cables 42 since no hole is created due to the inherent property of the flexible membrane 10, 20 of the gland plate which has excellent indentation force withstanding capacity. Thus IP30 parameters are respected and said assembly overcomes all the limitations of the prior art as mentioned earlier in the specification.

The invention also foresees the use of a core material, which has a negative Poisson ratio that would yield extraordinary results in achieving the functional requirements. Negative Poisson ratio occurs when the material expands laterally when stretched and contract when compressed.

## Claims

1. A flexible membrane gland plate (10) for the entry of incoming or outgoing cables (42) comprising a core layer (12) of closed cell thermoplastic rubber **characterized in that** the gland plate (10) comprises a top and a bottom layers (14) of closed cell linked thermoplastic nitrile foam with grain orientation sandwiching said core layer (12) wherein the grain direction of the top layer is perpendicular to the grain direction of the bottom layer, so as to provide means for preventing gap formation towards the core layer (12), through the top, core and bottom layers (12, 14), including by passage of a cable (42).

2. The flexible membrane gland plate according to claim 1 wherein the top and bottom layers (14) are made of acrylo nitrile butadiene copolymer.

3. The flexible membrane gland plate according to claim 1 or 2 wherein the core layer (12) is made of ethylene vinyl acetate copolymer with fire retardant fillers.

4. A flexible membrane gland plate (20) for the entry of incoming or outgoing cables (42) comprising a core layer (22) of closed cell cross linked thermoplastic rubber **characterized in that** the core layer (22) is made of closed celled cross linked polyethylene foam and the gland plate (20) further comprises:
- a top and a bottom layers (24) of polyurethane foam sandwiching said core layer (22);
- microporous films (26) in the thickness of 30µm to 60µm of polyurethane bonded on the exposed area of said polyurethane foam layers (24);
- so as to provide means for preventing gap formation towards the core layer (22), through the top, core and bottom layers (22, 24), including by passage of a cable (42).

5. The flexible membrane gland plate according to one of claims 1 to 4 having a thickness of 15 to 20mm.

6. The flexible membrane gland plate according to one of claims 1 to 5, wherein the thickness of the core layer (12, 22) is 4 to 6mm and the thickness of each of the top and bottom layers (14, 24) is 5.5 to 7mm.

7. The flexible membrane gland plate according to one of claims 1 to 6, wherein the core layer (12, 22) comprises an antirodent additive to prevent the gland plate from any damages due to rodents.

8. A reinforced panel (30) comprising a flexible membrane gland plate (10, 20) according to one of claims 1 to 7 and two layers (32) of glass fibre reinforced plastic laminates sandwiching said gland plate (10, 20).

9. The reinforced panel (30) according to claim 8 wherein each laminate (32) has a thickness of 1 to 1.5 mm.

10. The reinforced panel according to one of claims 9 or 10, wherein each laminate (32) comprises bidirectional E-glass fibres and an ultraviolet isophtalic polyester based resin forming the matrix.

11. An electrical enclosure (40) having a parallelepipedic shape wherein one of the top or bottom wall comprises a reinforced panel (30) according to one of claims 8 to 10.

12. Method of inserting a cable (42) through the wall of an electrical enclosure (40) according to claim 11 comprising the fixation of a guide pin (44) having a conical edge to an extremity of the cable (42) and inserting the guide pin (44) through the flexible gland plate (10, 20) of the reinforced panel (30).

## Patentansprüche

1. Flexible Membranplatte (10) für Kabeldurchführungen zum Eintritt von eingehenden oder ausgehenden Kabeln (42), umfassend eine Kernschicht (12) aus geschlossenzelligem thermoplastischem Kautschuk, **dadurch gekennzeichnet, dass** die Durchführungsplatte (10) eine obere und eine untere Schicht (14) aus geschlossenzellig verknüpftem Nitrilschaum mit Kornorientierung sandwichartig um die Kernschicht (12) angeordnet umfasst, wobei die Kornrichtung der oberen Schicht senkrecht zu der Kernschicht der unteren Schicht ist, um so Mittel zum Verhindern der Bildung von Lücken in Richtung der Kernschicht (12) durch die obere, Kern- und untere Schicht (12, 14) hindurch zu verhindern, einschließlich durch Passage eines Kabels (42).

2. Flexible Membranplatte für Kabeldurchführungen nach Anspruch 1, wobei die obere und untere Schicht (14) aus Acrylnitril-Butadien-Copolymer hergestellt sind.

3. Flexible Membranplatte für Kabeldurchführungen nach Anspruch 1 oder 2, wobei die Kernschicht (12) aus Ethylen-Vinylacetat-Copolymer mit Flammhemmfüllstoffen hergestellt ist.

4. Flexible Membranplatte (20) für Kabeldurchführungen zum Eintritt von eingehenden oder ausgehenden Kabeln (42), umfassend eine Kernschicht (22) aus geschlossenzellig vernetztem thermoplastischem Kautschuk, **dadurch gekennzeichnet, dass** die Kernschicht (22) aus geschlossenzelligem vernetztem Polyethylenschaum gefertigt ist und die Durchführungsplatte (20) ferner umfasst:
- eine obere und eine untere Schicht (24) aus Polyurethanschaum, sandwichartig um die Kernschicht (22) angeordnet;
- mikroporöse Filme (26) aus Polyurethan in der Dicke von 30 µm bis 60 µm, die an die freiliegende Fläche der Polyurethanschaumschichten (24) gebondet sind;
- um dadurch Mittel zum Verhindern der Bildung von Lücken in Richtung der Kernschicht (22) durch die obere, Kern- und untere Schicht (22, 24) hindurch bereitzustellen, einschließlich durch Passage eines Kabels (42).

5. Flexible Membranplatte für Kabeldurchführungen nach einem der Ansprüche 1 bis 4 mit einer Dicke von 15 bis 20 mm.

6. Flexible Membranplatte für Kabeldurchführungen nach einem der Ansprüche 1 bis 5, wobei die Dicke der Kernschicht (12, 22) 4 bis 6 mm beträgt und die Dicke von jeder der oberen und unteren Schicht (14, 24) 5,5 bis 7 mm beträgt.

7. Flexible Membranplatte für Kabeldurchführungen nach einem der Ansprüche 1 bis 6, wobei die Kernschicht (12, 22) ein Antinageradditiv umfasst, um Schäden durch Nagetiere an der Durchführungsplatte zu verhindern.

8. Verstärkte Tafel (30), umfassend eine flexible Membranplatte (10, 20) für Kabeldurchführungen nach einem der Ansprüche 1 bis 7 und zwei Schichten (32) aus glasfaserverstärkten Kunststofflaminaten, die die Durchführungsplatte (10, 20) sandwichartig umgeben.

9. Verstärkte Tafel (30) nach Anspruch 8, wobei jedes Laminat (32) eine Dicke von 1 bis 1,5 mm aufweist.

10. Verstärkte Tafel nach einem der Ansprüche 9 bis 10, wobei jedes Laminat (32) bidirektionale E-Glasfaser und ein Harz auf Ultraviolett-Isophthalpolyesterbasis umfasst, um die Matrix zu bilden.

11. Elektrikgehäuse (40) mit Parallelepipedform, wobei eine der oberen oder unteren Wände eine verstärkte Tafel (30) nach einem der Ansprüche 8 bis 10 umfasst.

12. Verfahren zum Einführen eines Kabels (42) durch die Wand eines Elektrikgehäuses (40) nach Anspruch 11, umfassend das Befestigen eines Führungsstifts (44) mit einer konischen Kante am äußersten Ende des Kabels (42) und Einführen des Führungsstifts (44) durch die flexible Durchführungsplatte (10, 20) der verstärkten Tafel (30) hindurch.

## Revendications

1. Passage de câbles à membrane flexible (10) pour l'entrée de câbles entrants ou sortants (42) comprenant une couche d'âme (12) en caoutchouc thermoplastique à alvéoles fermées **caractérisé en ce que** le passage de câbles (10) comprend une couche de dessus et une couche de dessous (14) en mousse de nitrile thermoplastique réticulé à alvéoles fermées avec orientation des grains enserrant ladite couche d'âme (12), dans laquelle la direction des grains de la couche de dessus est perpendiculaire à la direction des grains de la couche de dessous, de façon à fournir un moyen pour empêcher une formation d'interstice vers la couche d'âme (12), à travers les couches de dessus, d'âme et de dessous (12, 14), y compris par le passage d'un câble (42).

2. Passage de câbles à membrane flexible selon la revendication 1, dans lequel les couches de dessus et de dessous (14) sont réalisées en copolymère acrylonitrile - butadiène.

3. Passage de câbles à membrane flexible selon la revendication 1 ou 2, dans lequel la couche d'âme (12) est réalisée en copolymère d'éthylène-acétate de vinyle avec des charges de produit ignifuge.

4. Passage de câbles à membrane flexible (20) pour l'entrée de câbles entrants ou sortants (42) comprenant une couche d'âme (22) en caoutchouc thermoplastique réticulé à alvéoles fermées **caractérisé en ce que** la couche d'âme (22) est réalisée en mousse de polyéthylène réticulé à alvéoles fermées et le passage de câbles (20) comprend en outre :
- une couche de dessus et une couche de dessous (24) en mousse de polyuréthane enserrant ladite couche d'âme (22) ;
- des films microporeux (26) d'une épaisseur de 30 µm à 60 µm de polyuréthane liés sur la zone exposée desdites couches en mousse de polyuréthane (24) ;
- de façon à fournir un moyen pour empêcher la formation d'interstice vers la couche d'âme (22), à travers les couches de dessus, d'âme et de dessous (22, 24), y compris par le passage d'un câble (42).

5. Passage de câbles à membrane flexible selon l'une des revendications 1 à 4, ayant une épaisseur de 15 à 20 mm.

6. Passage de câbles à membrane flexible selon l'une des revendications 1 à 5, dans lequel l'épaisseur de la couche d'âme (12, 22) est de 4 à 6 mm et l'épaisseur de chacune des couches de dessus et de dessous (14, 24) est de 5,5 à 7 mm.

7. Passage de câbles à membrane flexible selon l'une des revendications 1 à 6, dans lequel la couche d'âme (12, 22) comprend un additif anti-rongeur pour empêcher tout dommage au passage de câbles dû aux rongeurs.

8. Panneau renforcé (30) comprenant un passage de câbles à membrane flexible (10, 20) selon l'une des revendications 1 à 7 et deux couches (32) de stratifiés en plastique renforcé de fibres de verre enserrant ledit passage de câble (10, 20).

9. Panneau renforcé (30) selon la revendication 8, dans lequel chaque stratifié (32) a une épaisseur de 1 à 1,5 mm.

10. Panneau renforcé selon l'une des revendications 9 ou 10, dans lequel chaque stratifié (32) comprend des fibres de verre E bidirectionnelles et une résine à base de polyester isophtalique résistant aux ultraviolets formant la matrice.

11. Enceinte électrique (40) ayant une forme parallélépipédique dans laquelle l'une des parois de dessus et de dessous comprend un panneau renforcé (30) selon l'une des revendications 8 à 10.

12. Procédé d'insertion d'un câble (42) à travers la paroi d'une enceinte électrique (40) selon la revendication 11, comprenant la fixation d'une broche de guidage (44) ayant un bord conique à une extrémité du câble (42) et l'insertion de la broche de guidage (44) à travers le passage de câble flexible (10, 20) du panneau renforcé (30).
